# EUROPÄISCHE PATENTSCHRIFT

(11) **EP 3 954 583 B1**
(45) Veröffentlichungstag und Bekanntmachung des Hinweises auf die Patenterteilung: **28.06.2023**
(21) Anmeldenummer: 21000209.3
(22) Anmeldetag: 30.07.2021
(51) Int. Cl.: B60R 9/045, B60R 9/055

(54) **DACHKOFFER**
ROOF BOX
COFFRE DE TOIT

(30) Priorität: 10.08.2020 DE 102020004864
(43) Veröffentlichungstag der Anmeldung: 16.02.2022
(73) Patentinhaber: Rakoczi, Viktor, 88090 Immenstaad am Bodensee (DE)
(72) Erfinder: Rakoczi, Viktor, 88090 Immenstaad am Bodensee (DE)
(74) Vertreter: Birnbach, Sebastian Michael

(56) Entgegenhaltungen:
- US-A- 2 754 041
- US-A1- 2014 132 022

## Beschreibung

Die Erfindung betrifft einen Dachkoffer. Insbesondere betrifft die Erfindung einen Dachkoffer zur Anbringung auf einem Fahrzeug.

Zum Transportieren sperriger Gegenstände mit einem Personenkraftwagen kann ein Dachkoffer auf dem Dach des Fahrzeugs angebracht werden. Die Gegenstände können beispielsweise ein Surfbrett oder Skier umfassen und im Dachkoffer aufgenommen werden. Der Dachkoffer ist häufig starr ausgeführt, beispielsweise in Schalenbauweise aus einem Kunststoff, und kann auch Dachbox genannt werden.

Nachteilig an bekannten Konstruktionen ist, dass das Anbringen und Abnehmen des Dachkoffers vom Fahrzeug aufgrund seiner schlechten Zugänglichkeit schwierig sein kann. Eine sichere Verbindung zwischen dem Dachkoffer und dem Fahrzeug kann aufwendig herzustellen oder zu trennen sein. Das Lagern einer starren Dachbox, wenn diese nicht benutzt werden soll, kann viel Platz in einem Abstellraum wie einer Garage oder einem Kellerabteil erfordern. Bekannte Dachboxen sind häufig nur von der Seite des Fahrzeugs aus zugänglich, sodass ein Einlegen oder Entnehmen eines beispielsweise langen Gegenstands aus einem montierten Dachkoffer viel Kraft oder Koordination von einer Bedienperson erfordern kann.

Zur Sicherung eines zu transportierenden Gegenstands mit oder ohne Dachbox können Gurte oder Seile verwendet werden. Der Gegenstand wird hierbei üblicherweise mittels mehrerer Gurte oder Seile kraftschlüssig am Dachträger des Fahrzeugs fixiert. Ein Nachteil dieser Befestigungsart liegt neben dem damit hohen verbundenen Aufwand hinsichtlich Ergonomie bzw. Zugänglichkeit und Präzision in der Anbringung des Gurtes selbst auch in der Gefahr, Druckstellen oder Beschädigungen am Gegenstand durch das straffe Anziehen des Gurtes zu verursachen.

US 2 754 041 A schlägt einen vertikal komprimierbaren Dachkoffer zur Anbringung auf einem Fahrzeug vor. US 2014/1320022 A1 betrifft einen Dachkoffer mit einer Anordnung starrer Flächenelemente, die eingefaltet werden können, um seine Höhe zu reduzieren.

Eine der vorliegenden Erfindung zu Grunde liegende Aufgabe besteht in der Angabe einer verbesserten Technik zum Transportieren eines Gegenstands auf einem Fahrzeug wie einem Personenkraftwagen. Die Erfindung löst diese Aufgabe mittels der Gegenstände der unabhängigen Ansprüche. Unteransprüche geben bevorzugte Ausführungsformen wieder.

Nach einem Aspekt der Erfindung umfasst ein Dachkoffer zur Anbringung auf einem Fahrzeug eine flexible Hülle zur Aufnahme eines zu transportierenden Gegenstands; eine Längsachse; wenigstens drei Rahmen, die sich jeweils in einer Ebene senkrecht zur Längsachse erstrecken; wobei die Rahmen dazu eingerichtet sind, die Hülle quer zur Längsachse aufzuspannen; und einen Scherenmechanismus, um die Rahmen entlang der Längsachse in vorbestimmten Abstandsverhältnissen zueinander zu halten.

Der erfindungsgemäße Dachkoffer kann, wenn er ausgeleert ist, in Längsrichtung, also entlang seiner Längsachse, gestaucht werden, sodass er weniger Volumen einnimmt und leichter handhabbar sein kann. Ein Innenraum des Dachkoffers kann durch das Stauchen stark verkleinert werden, sodass seine Außenabmessungen nur noch einen Bruchteil der im expandierten Zustand eingenommenen Abmessungen einnehmen können. Ein Anbringen oder Abnehmen des gestauchten Dachkoffers von einem Fahrzeug können erleichtert sein. Der gestauchte Dachkoffer kann leichter verstaut werden, wenn er beispielsweise in einem Keller oder in einer Garage eingelagert werden soll. Durch den Scherenmechanismus kann der Dachkoffer leicht entlang der Längsachse gestreckt oder expandiert werden, um einen oder mehrere Gegenstände aufzunehmen. Dabei kann der Scherenmechanismus dafür sorgen, dass die Rahmen auf vorbestimmten Bahnen parallel zueinander bewegt werden, sodass sich die Hülle gleichmäßig entfalten kann. Ein Rahmen ist bevorzugt in der Hülle aufgenommen und stellt eine laterale Stützkraft auf die Hülle bereit. In einer Ausführungsform liegt ein Rahmen an seiner Außenseite an der Hülle an, bevorzugt umlaufend. Der Rahmen kann punktuell oder umlaufend mit der Hülle verbunden und allgemein nach Art eines Spants oder einer Rippe gestaltet sein.

Es ist weiter bevorzugt, dass der Dachkoffer seine breiteste und höchste Stelle in einem mittleren Bereich bezüglich seiner Längsachse aufweist und von dort nach vorne und hinten flacher und/oder schmaler wird. Der Dachkoffer kann in einem Längsschnitt durch die Längsachse einen im Wesentlichen ellipsenförmigen Umriss aufweisen. Dabei ist weiter bevorzugt, dass der Dachkoffer zumindest im mittleren Bereich breiter als hoch ist. In einer besonders bevorzugten Ausführungsform ist der Dachkoffer dazu eingerichtet, ein Surfbrett aufzunehmen. Zusätzlich können Zubehörteile wie ein Segel, ein Gabelbaum, eine Finne oder ein Schwert in dem Dachkoffer aufgenommen werden. Ein Innenraum des Dachkoffers kann an Abmessungen des Surfbretts oder eines anderen zu transportierenden Gegenstands angepasst sein. Insbesondere kann ein Innenraum des Dachkoffers entlang der Längsachse so bemessen sein, dass der zu transportierende Gegenstand vorne und hinten an der Hülle anliegt, wenn er sich im geschlossenen Dachkoffer befindet. Dadurch kann der Scherenmechanismus voll aufgespannt werden, sodass die Hülle eine stabilisierende Wirkung auf den Dachkoffer ausübt.

Es ist weiterhin bevorzugt, dass der Scherenmechanismus dazu eingerichtet ist, jeweils benachbarte Rahmen in gleichen Abständen zueinander zu halten. Anders ausgedrückt können die Rahmen in regelmäßigen Abständen entlang der Längsachse angeordnet sein, unabhängig davon, ob der Dachkoffer in Längsachse gestreckt oder gestaucht ist.

Es ist insbesondere bevorzugt, dass der Dachkoffer in eine erste und eine zweite Konfiguration gebracht werden kann. Die erste Konfiguration kann gestreckt oder expandiert, und die zweite Konfiguration gestaucht oder komprimiert genannt werden. In der ersten Konfiguration ist die Hülle in Längsrichtung zwischen den Rahmen aufgespannt und der Dachkoffer nimmt eine erste Länge ein. In der zweiten Konfiguration ist die Hülle in Längsrichtung zwischen den Rahmen gefaltet und der Dachkoffer nimmt eine zweite Länge ein, die kleiner als die erste Länge ist. Dabei ist insbesondere bevorzugt, dass die erste Länge wenigstens dreimal so groß ist wie die zweite Länge. Beispielsweise kann die erste Länge ca. 1,80 m betragen, und die zweite Länge ca. 0,5 m.

In einer weiteren Ausführungsform kann der Dachkoffer in der komprimierten Konfiguration mittels einer Abdeckung eingepackt werden. Die Abdeckung kann dazu eingerichtet sein, auf den auf dem Dach des Fahrzeugs angebrachten Dachkoffer aufgezogen zu werden. Dadurch kann eine Aerodynamik des komprimierten Dachkoffers verbessert werden.

Ein Eindringen von Schmutz kann verhindert werden. Schädliche Einwirkung von ultraviolettem Licht auf die zwischen den Rahmen geknickte oder gefaltete Hülle kann verhindert werden. Außerdem kann die Abdeckung den vom Fahrzeugdach abgenommenen Dachkoffer vor Verunreinigungen oder mechanischen Beeinträchtigungen schützen. Wird die Abdeckung nicht benötigt, so kann sie in der Hülle aufbewahrt werden.

Es ist weiterhin bevorzugt, dass die Hülle aus einem dehnbaren Material besteht. Die Dehnbarkeit der Hülle kann wenigstens ca. 5 % betragen. Das Material der Hülle kann außerdem wasserdicht, reißfest und/oder lichtdicht sein. Beispielsweise kann die Hülle aus einem Material gefertigt sein, das für ein Verdeck eines Cabrio-Fahrzeugs verwendet werden kann. Ein anderes mögliches Material umfasst einen Synthesekautschuk wie Chloropren-Kautschuk, von dem eine Variante unter der Handelsbezeichnung Neopren bekannt ist. Die Abdeckung kann aus einem ähnlichen Material gefertigt sein.

Die Hülle kann in einem vorderen oder hinteren Bereich einen horizontalen Reißverschluss aufweisen, um den Gegenstand in die Hülle legen oder aus ihr entfernen zu können. Der Reißverschluss kann an der Vorder- oder Hinterseite des Dachkoffers insbesondere symmetrisch zur Längsachse angebracht werden, sodass ein Be- oder Entladen unmittelbar von vorne bzw. von hinten verbessert erfolgen kann. Dadurch kann es leichter sein, einen insbesondere langen Gegenstand wie ein Surfbrett oder ein Paar Skier in den Dachkoffer einzulegen oder aus ihm zu entfernen.

Optional ist ein Rastmechanismus vorgesehen, um den Scherenmechanismus in einer vorbestimmten Position zu halten. Die Position kann insbesondere einer hierin beschriebenen ersten Konfiguration entsprechen. Ein unbeabsichtigtes Verlassen der ersten Konstellation, beispielsweise beim Beladen oder Entladen des Dachkoffers, kann so verhindert werden.

Ein Abschnitt der Hülle kann mittels eines Geflechts aus Fasern oder Drähten verstärkt sein. Die Verstärkung kann insbesondere im einem Abschnitt vorgesehen sein, der stärker als andere Abschnitte auf Biegung oder auf Zug beansprucht ist, insbesondere wenn sich der Dachkoffer in der ersten Konstellation befindet. Die Verstärkung kann auch in einem Bereich vorgesehen sein, der vermehrter abrasiver Belastung ausgesetzt ist.

Um den Dachkoffer verbessert öffnen zu können, kann ein Rahmen im Bereich des Reißverschlusses teilbar sein. Bevorzugt sind mehrere Rahmen teilbar, insbesondere einseitig eines Mittelabschnitts des Dachkoffers. In einer ersten Ausführungsform kann der Rahmen in zwei Teile geteilt werden, von denen beim Öffnen jeweils einer auf unterschiedlichen Seiten des geöffneten Reißverschlusses an der Hülle verbleiben kann. In einer zweiten Ausführungsform umfasst der Rahmen zwei Teile, die mittels eines Schlosses und eines Scharniers miteinander verbunden sind. Wird das Schloss geöffnet, so können die beiden Teile am Scharnier aufgeklappt werden. In einer weiteren Ausführungsform sind zwei Scharniere auf unterschiedlichen Seiten eines Schlosses vorgesehen, sodass nach Öffnen des Schlosses zwei Teile des Rahmens gegenüber einem dritten nach Art eines zweiflügligen Tors aufgeklappt werden können. Das Schloss kann beispielsweise federbelastet, mittels einem Magneten oder eines Rastmechanismus geschossen gehalten sein.

Der Dachkoffer kann zusammen mit einem passenden Dachgepäckträger ein System bilden. Ein beispielhafter Dachgepäckträger zur Anbringung des hierin beschriebenen Dachkoffers auf einem Fahrzeug umfasst eine erste Befestigungseinrichtung zur Anbringung am Fahrzeug; eine zweite Befestigungseinrichtung zur Anbringung am Dachkoffer; und einen Mechanismus zum Drehen der Befestigungseinrichtungen gegeneinander um wenigstens 90°. Der Dachkoffer kann so gegenüber dem Fahrzeug um wenigstens 90° gedreht werden, bevorzugt um eine Hochachse des Dachkoffers, des Dachgepäckträgers und/oder des Fahrzeugs. So kann es deutlich leichter sein, den Dachkoffer am Fahrzeug zu handhaben. Der Dachkoffer kann so verbessert beladen oder entladen werden.

Der komprimierte Dachkoffer kann in einer Ausführungsform durch Drehen um seine Hochachse so ausgerichtet werden, dass seine Stirnfläche in Fahrtrichtung des Fahrzeugs verkleinert ist. Der Dachkoffer kann vor oder nach der Drehung komprimiert werden. Eine Längsachse des verdrehten Dachkoffers verläuft bevorzugt quer zu einer Längsachse des Fahrzeugs, während der Dachkoffer während der Fahrt des Fahrzeugs bevorzugt parallel zu dessen Längsachse ausgerichtet ist. Der Dachgepäckträger kann diese Drehung unterstützen und den gedrehten Dachkoffer in einer oder beiden Stellungen arretieren.

Die Drehung kann bewirken, dass der Dachkoffer in der komprimierten Konfiguration auf dem Fahrzeug verbessert stromlinienförmig ausgerichtet ist. Die der Fahrtrichtung zugewandte Frontfläche des Dachkoffers kann wesentlich verkleinert sein. Ein Luftwiderstand des Fahrzeugs mit dem Dachkoffer kann dadurch verringert sein. Außerdem können störende Windgeräusche bei Fahrt reduziert sein.

Der Mechanismus ist teilbar, um ein Trennen der ersten von der zweiten Befestigungseinrichtung zu erlauben. Dadurch kann der Dachkoffer leicht vom Fahrzeug abgenommen werden. Die erste Befestigungseinrichtung kann am Fahrzeug und die zweite am Dachkoffer verbleiben. Insbesondere, wenn der Dachkoffer häufig am Fahrzeug angebracht oder von diesem abgenommen werden soll, kann die Trennbarkeit des Mechanismus eine signifikant verbesserte Handhabbarkeit bewirken. Insbesondere kann der Mechanismus in einer ersten Drehstellung aus seinen beiden Teilen zusammengeführt und dann in eine zweite Drehstellung gebracht werden. Dabei ist der Mechanismus bevorzugt nicht in jeder beliebigen Drehstellung teilbar, sondern nur in der ersten oder in mehreren vorbestimmten Drehstellungen.

Insbesondere kann der Dachgepäckträger dazu eingerichtet sein, den Mechanismus teilen oder schließen zu können, wenn der Dachkoffer quer zum Fahrzeug steht. Wird der geschlossene Mechanismus dann gedreht, sodass der Dachkoffer parallel zum Fahrzeug steht, so kann ein Trennen des Mechanismus verhindert sein. Eine oder mehrere Drehstellungen, in denen das Teilen oder Schließen möglich ist, können vorbestimmt sein.

Der Mechanismus kann auf unterschiedliche Weisen realisiert werden. In einer bevorzugten Ausführungsform wird eine Kulissenführung verwendet, die eine Nut und einen in der Nut geführten Nutenstein umfasst. In einer besonders bevorzugten Ausführungsform umfasst die erste Befestigungseinrichtung eine erste Nut, die einer horizontalen Kreislinie folgt, sowie eine zweite und eine dritte Nut, die entlang zweier Sekanten zur Kreislinie verlaufen, wobei die Sekanten auf unterschiedlichen Seiten eines Durchmessers der Kreislinie verlaufen und gleiche Abstände zum Durchmesser haben. Dabei umfasst die zweite Befestigungseinrichtung bevorzugt vier Nutensteine, die derart voneinander beabstandet sind, dass zwei der Nutensteine in die zweite Nut und zwei andere derart in die dritte Nut eingeschoben werden können, dass die vier Nutensteine auch in der ersten, kreisförmigen Nut liegen.

In einer Ausführungsform ist eine Arretierung vorgesehen, um einen in eine Nut eingeführten Nutenstein in der Nut zu halten. Ein unbeabsichtigtes Trennen des Dachkoffers vom Dachgepäckträger kann dadurch verhindert sein.

Der Mechanismus kann bestimmen, in welchen Drehstellungen die Befestigungseinrichtungen voneinander getrennt beziehungsweise miteinander verbunden werden können. Eine trennbare Drehstellung ist allgemein gegeben, wo alle verwendeten Nutensteine aus ihren Nuten gehoben oder geschoben werden können.

Die zweite und die dritte Nut verlaufen bevorzugt quer zu einer Längsachse des Fahrzeugs. Der Mechanismus kann geschlossen werden, indem die vier Nutensteine seitlich und paarweise in die zweite und die dritte Nut eingeschoben werden, bis sie an Schnittpunkten der Sekanten mit der Kreislinie liegen. In dieser Position kann die zweite Befestigungseinrichtung gegenüber der ersten um eine Hochachse gedreht werden, wobei die vier Nutensteine die zweite und dritte Nut verlassen und nur noch in der ersten Nut geführt werden. Die Drehbewegung kann arretiert werden, wenn die erste Befestigungseinrichtung eine vorbestimmte Ausrichtung bezüglich der zweiten eingenommen hat, insbesondere wenn ein mit der zweiten Befestigungseinrichtung verbundener Dachkoffer parallel zu einem mit der ersten Befestigungseinrichtung verbundenen Fahrzeug steht. Zum Trennen des Mechanismus kann der beschriebene Vorgang in umgekehrter Reihenfolge durchlaufen werden.

In einer weiteren Ausführungsform sind eine vierte und eine fünfte Nut vorgesehen, die senkrecht zur zweiten und dritten Nut verlaufen. Insbesondere können sich die vierte und die fünfte Nut in Längsrichtung des Fahrzeugs erstrecken, wenn der Dachgepäckträger am Fahrzeug angebracht ist, sodass zwei Nutensteine in der zuletzt genannten Position zu liegen kommen und durch die vierte bzw. fünfte Nut nach vorne bzw. nach hinten bewegt werden können. Eine entsprechende Beweglichkeit kann durch zusätzliche oder durchgehende vierte und fünfte Nuten für die anderen beiden Nutensteine auf der gegenüber liegenden Seite der Kreislinie ermöglicht werden. Die zweite Befestigungseinrichtung kann auf diese Weise ganz oder abschnittsweise gegenüber der ersten in Längsrichtung verschoben werden. In einer Ausführungsform kann dadurch der Dachkoffer längs am Fahrzeug repositioniert werden. In einer anderen Ausführungsform kann der Dachkoffer in Längsrichtung gestreckt werden. Der Dachgepäckträger kann insbesondere in Verbindung mit einem hierin beschriebenen Dachkoffer eingesetzt werden. In einer Ausführungsform sind die Nutensteine paarweise derart mit dem Scherenmechanismus des Dachkoffers verbunden, dass der Dachkoffer gestreckt werden kann, wenn zwei der Nutensteine gegenüber zwei anderen entlang der Längsachse voneinander entfernt werden.

Nach einem weiteren Aspekt der vorliegenden Erfindung umfasst ein System einen hierin beschriebenen Dachkoffer und einen hierin beschriebenen Dachgepäckträger. Der Dachkoffer kann expandiert und komprimiert werden, wobei der komprimierte Dachkoffer ein wesentlich kleineres Volumen als der expandierte einnehmen kann. Der Dachgepäckträger kann ein Verdrehen des komprimierten Dachkoffers um eine Hochachse erlauben. Dadurch kann der komprimierte Dachkoffer in eine aerodynamisch günstige Position gebracht werden. So kann der Dachkoffer bei Nichtgebrauch platz- und energiesparend am Fahrzeugdach verbleiben.

In einem System mit dem in die zweite Konfiguration gebrachten Dachkoffer kann dieser gegenüber dem Dachgepäckträger um eine Hochachse um wenigstens 90° drehbar sein. Eine Stirnfläche des Dachkoffers bezüglich eines Fahrtwindes, wenn das Fahrzeug in Bewegung ist, kann durch die Drehbarkeit minimiert werden. Insbesondere kann eine Längsachse des Dachkoffers quer zum Fahrzeug gebracht werden, um die Stirnfläche des komprimierten Dachkoffers zu minimieren. Ein Windwiderstand und Windgeräusche können dadurch verringert sein.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen.

Die Erfindung wird nun unter Bezug auf die beiliegenden Figuren genauer beschrieben, in denen:
- Figur 1: einen Dachkoffer und einen Dachgepäckträger auf einem Fahrzeug;
- Figur 2: einen Dachkoffer in einer schematischen Draufsicht;
- Figur 3: einen Dachkoffer in einem Längsschnitt in verschiedenen Zuständen;
- Figur 4: einen Dachkoffer in einer Draufsicht in unterschiedlichen Orientierungen;
- Figur 5: einen Dachgepäckträger in einer schematischen Draufsicht;
- Figur 6: einen beispielhaften Kopplungsvorgang eines Dachgepäckträgers;
- Figur 7: eine Ausführungsform eines Schlosses für einen Rahmen; und
- Figur 8: eine Ausführungsform eines Gleiters an einem Rahmen
darstellt.

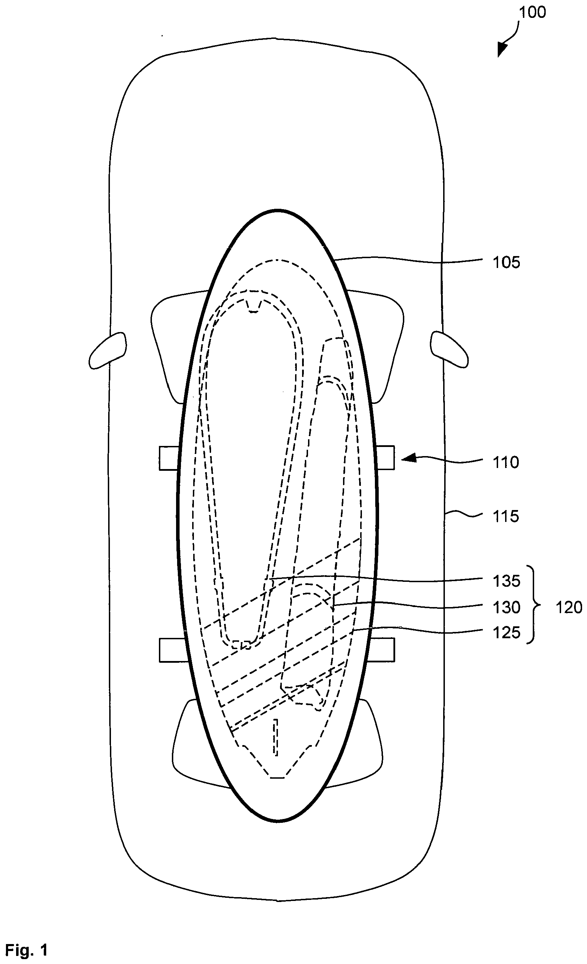

Figur 1 zeigt ein System 100, das einen Dachkoffer 105 und mindestens einen ersten Dachgepäckträger 110 exemplarisch umfasst. Der Dachgepäckträger 110 ist dazu eingerichtet, den Dachkoffer 105 auf einem Fahrzeug 115 anzubringen. Das Fahrzeug 115 kann insbesondere einen Personenkraftwagen oder einen Kleinbus umfassen. Üblicherweise wird der Dachgepäckträger 110 im Bereich eines Daches des Fahrzeugs 115 angebracht, beispielsweise an einer vom Fahrzeug 115 umfassten Dachreling, an einem vorbestimmten Befestigungspunkt oder beispielsweise mittels eines Magneten oder eines Saugnapfs. Der Dachkoffer 105 ist dazu eingerichtet, Gegenstände 120 aufzunehmen, die auf dem Dach des Fahrzeugs 115 transportiert werden sollen. Dabei handelt es sich üblicherweise um Gegenstände 120, die zu sperrig sind, um sie

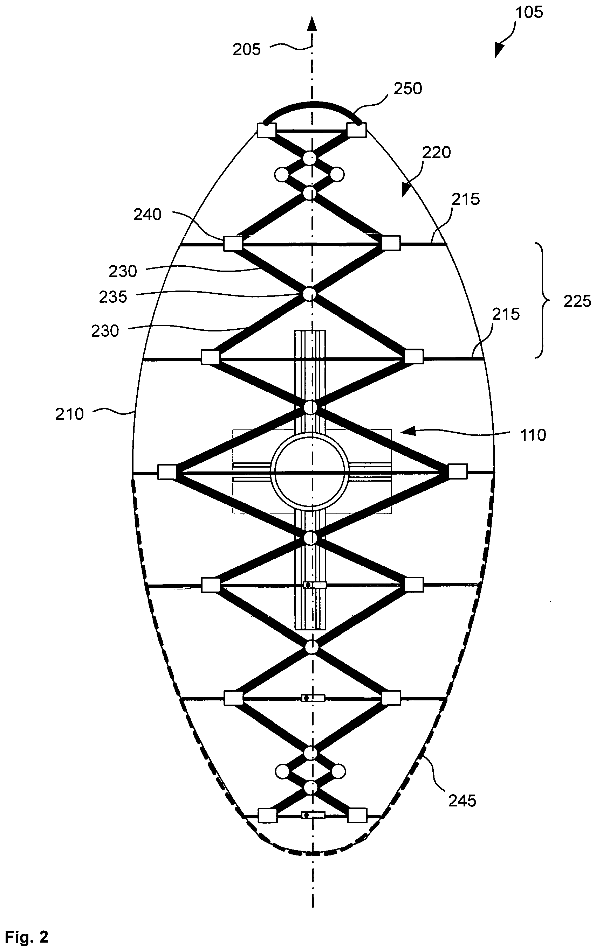

Figur 2 zeigt einen Dachkoffer 105 in einer schematischen Draufsicht. Der Dachkoffer 105 ist teilweise transparent dargestellt, um seinen Aufbau und das Zusammenspiel mit dem Dachgepäckträger 110 zu erläutern. Der Dachkoffer 105 erstreckt sich entlang einer Längsachse 205, die üblicherweise parallel zu einer Längsachse eines Fahrzeugs 115 verläuft, wenn der Dachkoffer 105 mittels eines mindestens ersten Dachgepäckträgers 110 auf dem Fahrzeug 115 angebracht ist.

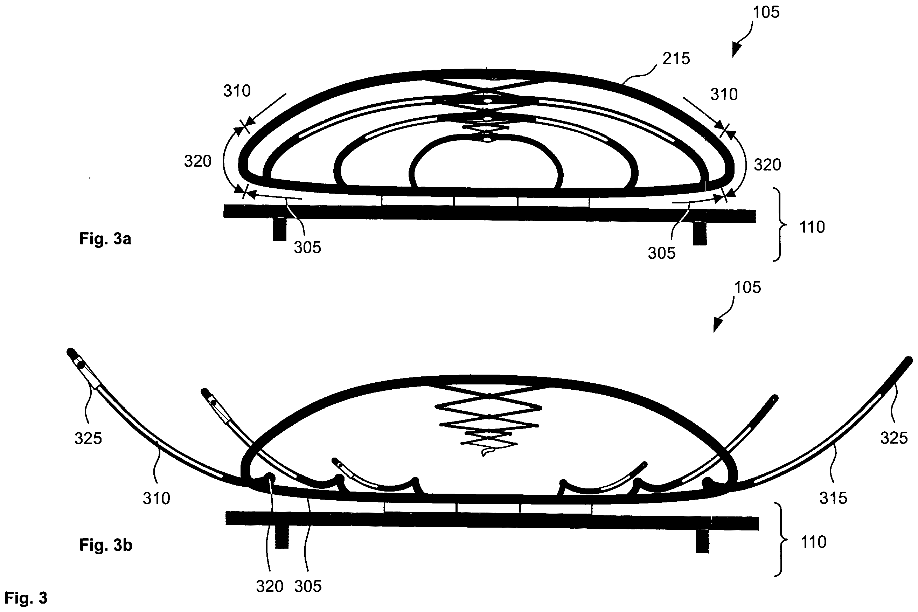

Der Dachkoffer 105 umfasst eine flexible Hülle 210, die mittels einer Serie von Rahmen 215 aufgespannt werden kann. Ein Rahmen 215 kann einen im Wesentlichen elliptischen Querschnitt aufweisen, wie beispielsweise mit Bezug auf Figur 3 noch genauer erläutert wird, und liegt bevorzugt auf einer Innenseite der Hülle 210. Dabei ist weiter bevorzugt, dass die flexible Hülle 210 in einer Richtung senkrecht zur Längsachse 205 möglichst vollständig an einem Rahmen 215 anliegt. Die Hülle 210 kann punktuell oder auf voller Länge am Rahmen 215 befestigt sein. Ein in dem Dachkoffer 105 zu transportierender Gegenstand 120 kann in einer Richtung senkrecht zur Längsrichtung 205 von einem Rahmen 215 umschlossen sein. An einer Innenseite eines Rahmens 215 kann ein elastisches Element wie eine Schaumstoffeinlage oder eine Gummilippe vorgesehen sein, um eine Druckstelle oder Beschädigung am Gegenstand 120 zu vermeiden. Das elastische Element kann einen Transport eines Gegenstands 120 ohne eine zusätzliche Befestigung im Inneren des Dachkoffers 105 erlauben. Mit anderen Worten kann der Gegenstand 120 lose im Inneren des Dachkoffers 105 liegen und durch das elastische Element gegen Verlagerung geschützt sein.

Eine Anzahl der Rahmen 215 kann ungerade sein, sodass ein mittlerer Rahmen 215 existiert. Dieser weist bevorzugt die größten Abmessungen in Querrichtung und/oder in Hochrichtung auf. Bei einer geraden Anzahl von Rahmen 215 können auch zwei gleich große Rahmen 215 in einem mittleren Bereich angeordnet sein und maximale Ausdehnungen quer zur Längsachse 205 aufweisen. Vom mittleren Bereich aus nach vorne und/oder nach hinten können Abmessungen der Rahmen 215 in Querrichtung und/oder in Hochrichtung abnehmen. Ein Umriss des Dachkoffers 105 ist bevorzugt symmetrisch zur Längsachse 205 und kann zusätzlich symmetrisch zu einer Querachse sein, die in seinem mittleren Bereich quer zur Längsachse 205 verläuft.

Die Rahmen 215 sind mittels eines Scherenmechanismus 220 in vorbestimmten relativen Abstandsverhältnissen gehalten. Bevorzugt sind Abstände benachbarter Rahmen 215 entlang der Längsachse 205 jeweils gleich. Der Scherenmechanismus 220 umfasst eine Anzahl Abschnitte 225, die jeweils zwischen bei benachbarten Rahmen 215 liegen und im Wesentlichen gleich aufgebaut sind. Ein Abschnitt 225 umfasst zwei Hebel 230, die mittels eines Drehgelenks 235 um eine Hochachse drehbar miteinander verbunden sind. Ein Ende jedes Hebels 230 ist mit einem Gleiter 240 verbunden, der in Querrichtung verschiebbar an einem Rahmen 215 angebracht ist. Eine Verbindung zwischen dem Hebel 230 und dem Gleiter 240 ist bevorzugt ebenfalls drehbar um eine Hochachse. Sind vier Gleiter 240 an den Enden der zwei Hebel 230 an benachbarten Rahmen 215 angebracht, so können die Rahmen 215 parallel aneinander angenähert oder voneinander entfernt werden, indem ein Winkel zwischen den Hebeln 230 am Drehgelenk 235 verändert wird. Hebel 230 eines benachbarten Abschnitts 225 können an denselben Gleitern 240 eingreifen. Ein Verhältnis von Abständen zwischen Rahmen 215 kann auf diese Weise konstant gehalten werden, während der Scherenmechanismus 220 entlang der Längsachse 205 gestaucht oder expandiert wird.

Ein Gleiter 240 kann in seiner Bewegung entlang einem Rahmen 215 frei oder eingeschränkt sein. Zur Einschränkung können am Rahmen 215 einer oder zwei Anschläge vorgesehen sein, die den Gleiter 240 jeweils einseitig in seiner Bewegung entlang des Rahmens 215 begrenzen.

Um einen Gleiter 240 verbessert in einer vorbestimmten Position entlang des Rahmens 215 zu halten, kann ein Rastmechanismus vorgesehen sein. Der Rastmechanismus kann ein Rastelement umfassen, das senkrecht zur Verschieberichtung beweglich und mittels eines elastischen Elements vorgespannt ist. Hat der Gleiter 240 die vorgesehene Position erreicht, kann der Mechanismus einrasten. Das Rastelement ist bevorzugt am Gleiter 240 angebracht und kann in eine Vertiefung, beispielsweise eine Bohrung oder eine Nut, am Rahmen 215 einrasten. Umgekehrt kann auch das Rastelement am Rahmen 215 angebracht sein und in eine Vertiefung am Gleiter 240 eingreifen.

Ein in die Vertiefung eingreifendes Ende des Rastelements kann rund oder halbkugelförmig sein. Zur weiteren Verschiebung des am Rahmen 215 eingerasteten Gleiters 250 kann eine vorbestimmte Kraft in Verschieberichtung überwunden werden müssen.

Der Rastmechanismus kann auch gelöst werden, indem das Rastelement manuell aus der Vertiefung bewegt wird. Ist das Ende des Rastelements gerade, kann ein manuelles Lösen erforderlich sein, um den Gleiter 240 gegenüber dem Rahmen 215 wieder zu verschieben. Zum Lösen kann eine Kraft direkt oder durch die Hülle 210 auf das Rastelement ausgeübt werden. Eine Stelle, an der die Kraft auf das Rastelement ausgeübt werden kann, ist in einer weiteren Ausführungsform nur zugänglich, wenn der Reißverschluss 245 der Hülle 210 geöffnet ist.

Der Rastmechanismus kann auch zusammen mit einem Anschlag eingesetzt werden. Rastmechanismen an mehreren Gleitern 240 können aufeinander abgestimmt sein, um jeweils einzurasten, wenn sich der Dachkoffer 105 in einer vorbestimmten Konfiguration befindet. Insbesondere können einer oder mehrere Rastmechanismen dazu beitragen, den Dachkoffer 105 entgegen einer mechanischen Spannung der Hülle 210 in einer hierin beschriebenen ersten Konfiguration zu halten.

Ist ein Rahmen 215 in Querrichtung zu klein, um einen ausreichenden Verschiebeweg für einen Gleiter 240 bereitzustellen, wie beispielsweise am obersten und untersten dargestellten Abschnitt 225, so können in einem angrenzenden Abschnitt 225 auch vier Hebel 230 verwendet werden, die paarweise mittels eines Drehgelenks 235 miteinander verbunden sind, und deren jeweils von Rahmen 215 entfernte Enden mittels weiterer Drehgelenke 235 paarweise miteinander gekoppelt sind, wie in Figur 2 zu sehen ist.

Um eine Steifigkeit des Scherenmechanismus 220 zu erhöhen, ist es bevorzugt, die Hebel 230 in Anbetracht verfügbarer Verschiebewege an dem Rahmen 215 möglichst lang zu wählen. Ein Hebel 230 kann insbesondere flach ausgeführt sein und beispielsweise aus einem Bandstahl hergestellt werden.

Um den Dachkoffer 105 entlang der Längsachse 205 zu expandieren, ihn also in seine maximale Länge entlang der Längsachse 205 zu bringen, kann ein Gegenstand 120 in die Hülle 210 eingelegt werden, die beim Schließen der Hülle 210 deren maximale Länge ausfüllt. In einer weiter bevorzugten Ausführungsform können zwei Gleiter 240, die an demselben Rahmen 215 angebracht sind, in Querrichtung zueinander gezogen werden. Dazu kann beispielsweise ein Seilzug vorgesehen sein. Der Seilzug kann einseitig oder beidseitig über eine Umlenkrolle laufen, die an einem der Gleiter 240 angebracht ist. In noch einer weiteren Ausführungsform kann zwischen den Gleitern 240 auch ein Flaschenzug vorgesehen sein, um eine vergrößerte Expansionskraft in Längsrichtung 205 zu bewirken. Enden des Seilzugs oder des Flaschenzugs können auf einer Innenseite oder einer Außenseite der Hülle 210 liegen. In noch einer weiteren Ausführungsform ist ein Griff vorgesehen, um den Dachkoffer 105 manuell zu expandieren.

Die Hülle 210 kann bevorzugt mittels eines Reißverschlusses 245 zumindest teilweise horizontal geteilt werden. Der Reißverschluss 245 erstreckt sich weiter bevorzugt symmetrisch zur Längsachse 205, sodass ein vorbestimmter Abschnitt der Hülle 210 entlang der Längsachse 205 von vorne oder von hinten geöffnet werden kann, um einen Teil von ihr nach oben zu klappen. In Figur 2 ist der Reißverschluss 245 beispielhaft im hinteren Bereich angebracht und erstreckt sich bis zum Rahmen 215 mit der größten Abmessung in Querrichtung. Zum Einlegen oder Entfernen eines Gegenstands 120 können einer oder mehrere der Rahmen 215, die durch den geöffneten Reißverschluss 245 unter der Hülle 210 freigelegt werden können, geöffnet werden.

Auf einer oberen Seite der Hülle 210 kann ein weiterer Reißverschluss 245 vorgesehen sein (nicht dargestellt), um einen Durchgriff ins Innere der Hülle 210 zu erlauben. Die Reißverschlüsse 245 können jeweils Zwei-Wege-Verschlüsse umfassen, die zwei oder mehr beweglichen Schieber zum Öffnen oder Schließen aufweisen können.

Die Hülle 210 kann abschnittsweise oder überall mit einer zusätzlichen Lage eines flexiblen aber reißfesten Materials verstärkt sein. Eine solche Verstärkung kann insbesondere im Bereich höher Reib-, Biete- oder Zugbelastungen auf die Hülle 210 angebracht sein. Beispielsweise kann eine Verstärkung gezielt in Bereichen verwendet sein, die am Rahmen 210 oder einem Element des Scherenmechanismus 220 anliegt. Das Verstärkungsmaterial kann ein Drahtgeflecht umfassen.

Optional ist an einem nicht zu öffnenden Ende des Dachkoffers 105, insbesondere vorne, ein Abschlusselement 250 vorgesehen. Das Abschlusselement 250 kann eine schalenförmige, teils starre Einlage zur Formgebung aufweisen. Das Abschlusselement 250 kann an dem Rahmen 215 starr oder beweglich angebracht sein. Alternativ kann das Abschlusselement 250 an der Hülle 210 befestigt sein, beispielsweise mittels Nähen, Kleben oder Nieten.

Die Hülle 210 kann im vorderen oder hinteren Bereich des Dachkoffers 105 einen Ein- oder Auslass von Luft aufweisen, der mit einem feinmaschigen, flexibles Netz abgedeckt sein kann. So kann ein Durchzug von Luft durch den Dachkoffer 105 ermöglicht werden. Im expandierten Dachkoffer 105 aufgenommene, nasse Gegenstände können so verbessert getrocknet werden. Dazu kann ein Fahrtwind eines den Dachkoffer 105 transportierenden Fahrzeugs ausgenutzt werden. Ein Einlass oder Auslass kann mittels eines Abschnitts der Hülle 210 verschlossen werden, beispielsweise mittels eines Reißverschlusses 245. Ein weiterer Reißverschluss 245 kann dazu vorgesehen sein, einen losen Abschnitt am Einlass oder Auslass zu sichern. Gegen störende Geräusche kann für einen Schieber des Reißverschlusses 245 eine halb offene Tasche vorgesehen sein.

Der Reißverschluss 245 kann ganz oder teilweise aus einem thermoplastischen Material wie Polypropylen, einem Acrylnitril-Butadien-Styrol-Copolymer (ABS), Polyurethan oder einer Kombination daraus herstellbar sein. Vorzugsweise sind der Reißverschluss 245 und/oder die Hülle 210 zumindest teilweise aus einem thermoplastischen Polyurethan wie Poly(adiabat)ester auf der Basis von thermoplastischem Polyurethan, beispielsweise ISO-THANE 1055D, herstellbar.

Der Dachkoffer 105 kann in Längsrichtung mehrere Sektionen aufweisen, die mittels flexibler Elemente voneinander getrennt werden können. Ein solches Element kann ein Textil oder ein Netz umfassen, das mittels eines Reißverschlusses in radialer Richtung an der Hülle 210 befestigt oder von ihr getrennt werden kann. Entlang der Anlage an der Hülle 210 können auch mehrere Reißverschlüsse vorgesehen sein. Zwischen den Reißverschlüssen kann ein Übergang zwischen Abschnitte 215.1, 215.2 oder 215.3 liegen. Ein Band eines Reißverschlusses kann integriert mit einem Abschnitt 215.1 bis 215.3 ausgeführt sein, etwa indem beide Teile mittels Spritzguss in einem Arbeitsgang gefertigt werden. Alternativ kann auch ein Kunststoffteil an ein anderes Teil angespritzt werden.

Figur 3 zeigt einen Dachkoffer 105 in einem Längsschnitt in unterschiedlichen Zuständen. Figur 3A zeigt den Dachkoffer 105 mit geschlossenen Rahmen 215, und Figur 3B mit geöffneten Rahmen 215. Eine Schnittebene verläuft mit Bezug auf Figur 2 quer zur Längsachse 205, unmittelbar vor dem breitesten Rahmen 215; eine Blickrichtung ist nach hinten, in Richtung des Reißverschlusses 245. Die Hülle 210 ist nicht dargestellt.

In Figur 3A ist zu erkennen, dass ein Innenraum des Dachkoffers 105, der durch die Rahmen 215 definiert ist, auf seiner Unterseite bevorzugt abgeflacht ist. Es ist weiter bevorzugt, dass ein Boden des Innenraums leicht konkav gewölbt ist. Die Rahmen 215 können ansonsten im Wesentlichen elliptisch sein. Es ist weiterhin bevorzugt, dass ein Rahmen 215 keine scharfen Kanten oder Knicke aufweist, um die Hülle 210 möglichst nicht punktförmig zu belasten.

Wie in Figur 3B zu erkennen ist, kann ein Rahmen 215, der durch den Reißverschluss 245 freigelegt werden kann, drei Abschnitte umfassen. Ein erster Abschnitt 305 kann beispielsweise im Bereich eines Bodens des Innenraums des Dachkoffers 105 angeordnet sein und kann auch Bodenabschnitt 305 genannt werden. Enden des Bodenabschnitts 305 liegen bevorzugt auf unterschiedlichen Seiten der Längsachse 205, weiter bevorzugt symmetrisch. An einem linken Ende kann ein zweiter Abschnitt 310 und an einem rechten Ende ein dritter Abschnitt 315 jeweils mittels eines Klappgelenks 320 angebracht sein. Der Bodenabschnitt 305 und/oder ein Abschnitt 310 oder 315 kann aus einem Flachprofil herstellbar sein, beispielsweise ebenfalls aus Kunststoff oder aus einem Leichtmetall. Das Flachprofil kann beispielsweise mittels Spritzgießen, Stranggießen, Strangpressen oder Extrudieren hergestellt sein.

Das Klappgelenk 320 erlaubt bevorzugt ein Schwenken der Abschnitte 310, 315 bezüglich des ersten Abschnitts 305 entlang einer Drehachse, die sich parallel zur Längsachse 205 erstrecken kann. Entfernte Enden der Abschnitte 310 und 315 können mittels eines Schlosses 325 kraftschlüssig miteinander verbunden werden. Ein Schloss 325 kann bevorzugt geschlossen werden, indem Enden der Abschnitte 310, 315 miteinander verrastet werden. Zum Öffnen kann es erforderlich sein, dass am Schloss 325 ein Hebel oder eine Taste betätigt wird. So kann ein unbeabsichtigtes Öffnen eines Schlosses 325 verhindert sein. Das Schloss 325 kann einen axial verschiebbaren Hohlzylinder umfassen, der über einen Zylinder geschoben werden kann. Zylinder und Hohlzylinder können mittels eines Rastmechanismus, eines Bajonettverschlusses oder mittels Verschrauben aneinander gesichert werden. Der Hohlzylinder kann mit einer Feder axial vorgespannt sein, um einem unbeabsichtigten Lösen entgegen zu wirken.

Auch ein Rahmen 215, der nicht über ein Klappgelenk 320 verfügt, kann mehrteilig aufgebaut sein. Dazu kann das Klappgelenk 320 durch ein festes Element ersetzt sein, das bevorzugt aus einem Kunststoff herstellbar ist, insbesondere mittels Spritzguss. Das feste Element kann eine Verstärkung umfassen, die aus einem anderen Material besteht, beispielsweise einem Faserwerkstoff wie Glasfaser, Kohlefaser oder Aramidfaser. Die Abschnitte 305 bis 315 können auf beliebige Weise starr aneinander angebracht werden. Dazu kann ein Abschnitt 305 bis 315 bevorzugt in eine korrespondierende Aussparung des festen Elements eingeschoben werden.

Ein Abschnitt 305 - 315 kann massiv, hohl oder einseitig offen ausgeführt sein. Optional kann eine Aussparung zur Material- oder Gewichtsersparnis eingebracht sein. Die Aussparung kann sich in oder durch das Material des Abschnitts 205 - 315 erstrecken. Wird der Abschnitt 305 - 315 im Guss- oder Spritzguss hergestellt, so kann er an einer Längsseite offen sein, wobei in dem dadurch zugänglichen Hohlraum Verstärkungen vorgesehen sein können, beispielsweise in Form von Stegen, Rippen oder Wabenstrukturen. Eine Verstärkung ist bevorzugt einstückig mit dem jeweiligen Abschnitt 305 - 315 ausgeführt, kann aber auch ein Einlegeteil, ein angespritztes Teil oder ein montiertes Teil umfassen, das auch aus einem anderen Material hergestellt sein kann. Durch den Einsatz einer oder mehrerer Verstärkungen können eine Biegefestigkeit oder eine Torsionsfestigkeit erhöht sein. Die Biegefestigkeit kann gezielt beeinflusst werden, um eine Spannung der Hülle 210 sicherzustellen. Optional ist ein Abschnitt 305 - 315 entlang seiner Erstreckung unterschiedlich biegsam, sodass eine vorbestimmte Form der Hülle 210 durch die ungleichmäßig verteilte Biegsamkeit unterstützt wird.

Abschnitte 305 bis 315, das Klappgelenk 320 und das dieses ersetzende feste Element können modular zu Rahmen 215 zusammengefügt werden. Dabei kann nach dem Prinzip eines Baukastens vorgegangen werden, um einen oder mehrere der Abschnitte 305 bis 315 als Gleichteile mehrfach am Dachkoffer 105 einzusetzen.

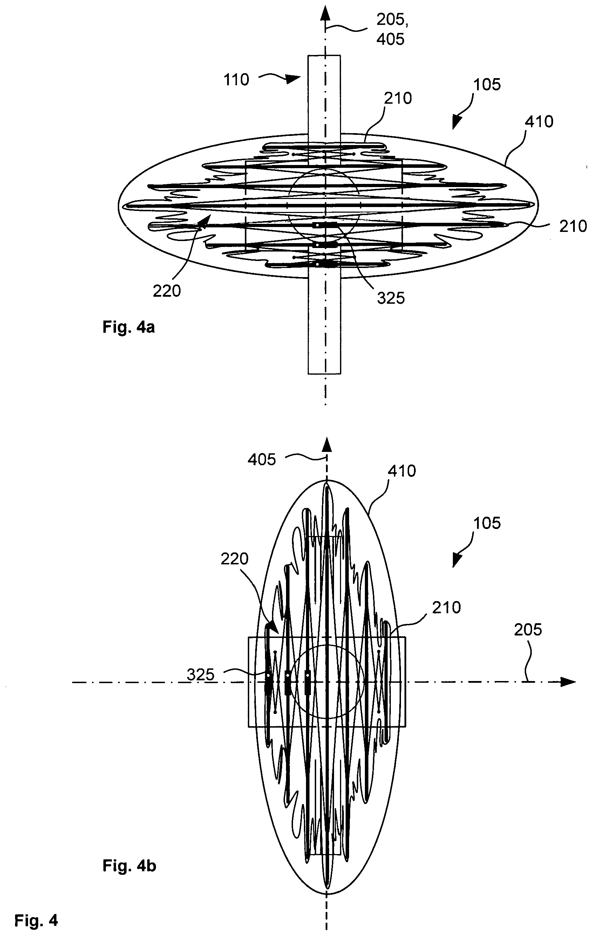

Figur 4 zeigt einen Dachkoffer 105 in einer Draufsicht in unterschiedlichen Orientierungen. Figur 4A zeigt eine Orientierung, in der die Längsachse 205 parallel zu einer Längsachse 405 eines Fahrzeugs 115 verläuft, wenn der Dachkoffer 105 mittels des Dachgepäckträgers 110 an diesem angebracht ist. Figur 4B zeigt eine Orientierung, bei welcher der Dachkoffer 105 gegenüber der Darstellung von Figur 4A um 90° im Uhrzeigersinn verdreht ist, sodass die Längsachse 205 einen rechten Winkel mit der Längsachse 405 des Fahrzeugs 115 einschließt.

In beiden Darstellungen ist der Dachkoffer 105 in einer komprimierten Konfiguration gezeigt, in der die Rahmen 215 so nah wie möglich aneinander liegen und eine Länge des Dachkoffers 105 entlang der Längsachse 205 minimal ist. Die Hülle 210 ist zusammengefaltet. Diese Konfiguration kann auch als komprimiert bezeichnet werden. Im Unterschied dazu ist in Figur 2 eine expandierte Konfiguration dargestellt, bei der benachbarte Rahmen 215 maximale Abstände zueinander aufweisen und eine Länge des Dachkoffers 105 entlang der Längsachse 205 maximal ist. Der Scherenmechanismus 220 ist in Figuren 4A und 4B vereinfacht dargestellt.

Eine Abdeckung 410 kann über den komprimierten Dachkoffer 105 gezogen werden, um ihn gegen Wasser oder Verschmutzung zu schützen oder bei beiden Ausrichtungen um die Hochachse aerodynamischer zu machen. Wird die Abdeckung 410 nicht benötigt, so kann sie beispielsweise im Innenraum des Dachkoffers 105 oder beispielsweise in einer aufgesetzten Außentasche aufbewahrt werden.

Die verschiedenen hierin offenbarten strukturellen Elemente des Dachkoffers 105 können aus jedem geeigneten Material oder einer Kombination von Materialien, wie z. B. Metall, Kunststoff, Nylon, Plastik, Gummi oder irgendwelchen anderen Materialien mit einer hinreichenden strukturellen Festigkeit gebildet sein, die den bei der Verwendung auftretenden Belastungen standhält. Insbesondere kann ein aus einem Kunststoff hergestelltes Element mittels eines Elements aus einem anderen Material verstärkt sein, insbesondere einem Faserwerkstoff. Die Materialien können jeweils auf der Basis ihrer Dauerhaltbarkeit, ihrer Flexibilität, ihres Gewichts und/oder ihren ästhetischen Qualitäten ausgewählt werden.

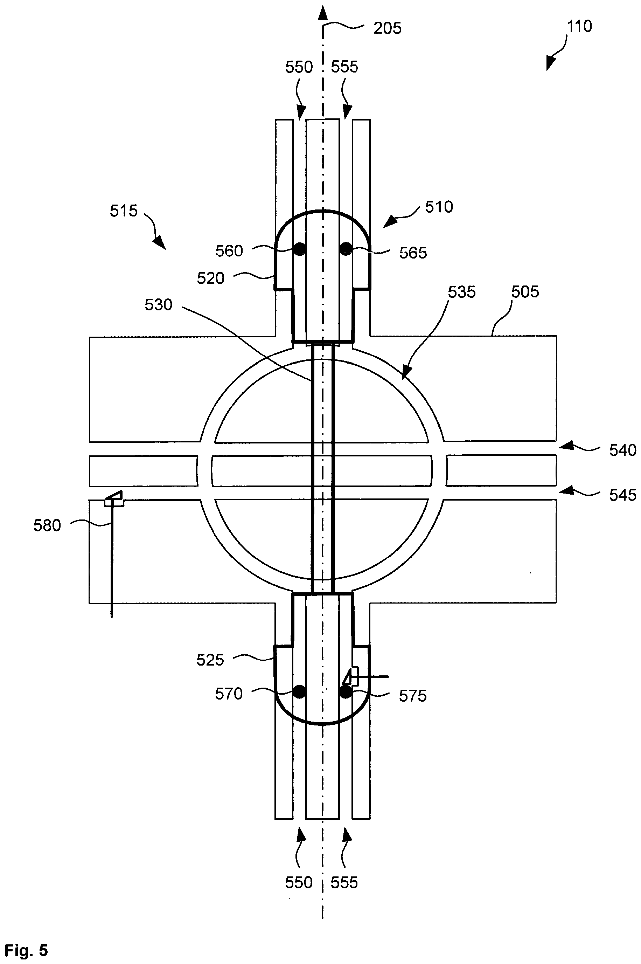

Figur 5 zeigt den Dachgepäckträger 110 in einer schematischen Draufsicht. Der Dachgepäckträger 110 ist bevorzugt zur Befestigung eines Dachkoffers 105 an einem Fahrzeug 115 eingerichtet. Der Dachgepäckträger 110 umfasst eine erste Befestigungseinrichtung 505 zur Anbringung am Fahrzeug 115, beispielsweise an einer Dachreling oder einem dafür vorgesehenen Befestigungspunkt, und eine zweite Befestigungseinrichtung 510 zur Anbringung am Dachkoffer 105. Die Befestigungseinrichtungen 505 und 510 sind mittels eines Mechanismus 515 miteinander verbunden, der eine vorbestimmte Beweglichkeit der Befestigungseinrichtungen 505 und 510 zueinander erlauben kann. Es ist zu beachten, dass die Befestigungseinrichtungen 505 und 510 in beispielhaften Ausführungsformen dargestellt sind. Ihre konkrete Ausprägung wird im Wesentlichen bestimmt durch ihre Anbringung am Fahrzeug 115 bzw. dem Dachkoffer 105 und der Ausführung des Mechanismus 515.

Die dargestellte erste Befestigungseinrichtung 505 kann aus einer Platte abgeleitet sein, die rechteckig oder wie ein Pluszeichen geformt ist. In einer Ausführungsform kann die erste Befestigungseinrichtung 505 am Fahrzeug 115 befestigt werden, beispielsweise mittels einer Klemme oder Schraube. Die zweite Befestigungseinrichtung 510 kann praktisch beliebig geformt sein und ist bevorzugt aus einem starren, ebenen Element herstellbar. In der dargestellten Ausführungsform umfasst die zweite Befestigungseinrichtung 510 einen ersten Abschnitt 520 und einen zweiten Abschnitt 525, die mittels einer Verbindung 530 miteinander verbunden sind. Dabei kann einer der Abschnitte 520, 525 entlang einer Erstreckungsrichtung der Verbindung 530 beweglich sein, sodass die Abschnitte 520 und 525 einander angenähert oder voneinander entfernt werden können, beispielsweise mittels einer teleskopischen Führung. Die teleskopische Führung kann im Inneren eine Zug- oder Druckfeder (nicht dargestellt) aufweisen, um die Abschnitte 520, 525 in eine vorbestimmte Position zu drücken oder zu ziehen. Die Feder kann dazu beitragen, den Dachkoffer 105 in eine expandierte Konfiguration zu bewegen.

Der Gegenstand 120 kann ohne weitere Sicherung im Inneren des Dachkoffers 105 aufgenommen werden. In einer weitere Ausführungsform kann ein Fixierelement für den Gegenstand 120 im Dachkoffer 105 vorgesehen sein, beispielsweise ein verstellbarer Gurt, eine Tasche oder ein elastischer Zug. Ein im Dachkoffer 105 zu transportierender Gegenstand 120 ist üblicherweise zu sperrig, um ihn in einem Gepäckraum des Fahrzeugs 115 zu transportieren. Beispielhaft mit unterbrochenen Linien dargestellte Gegenstände 120 umfassen ein Surfbrett 125 und eine Tasche 130, in der ein Segel und/oder ein Mast aufgenommen sein können, sowie einen Gabelbaum 135.

Der Mechanismus 515 erlaubt es bevorzugt, die erste Befestigungseinrichtung 505 mit der zweiten 510 in Eingriff zu bringen oder von ihr zu lösen. Außerdem können die Befestigungseinrichtungen 505, 510 um eine Hochachse gegeneinander verdrehbar sein, während sie sich im gegenseitigen Eingriff befinden. In bestimmten Stellungen der Befestigungseinrichtungen 505 und 510 zueinander kann es möglich sein, die Abschnitte 520 und 525 voneinander zu entfernen oder aufeinander zuzubewegen.

Der Mechanismus 515 ist bevorzugt gebildet durch eine Anordnung von Kulissenführungen, die jeweils eine Nut und einen entlang der Nut verschiebbar in dieser aufgenommenen Kulissenstein umfassen.

In der dargestellten Ausführungsform sind an der ersten Befestigungseinrichtung 505 eine erste Nut 535, eine zweite Nut 540 und eine dritte Nut 545 vorgesehen. Die erste Nut 535 erstreckt sich entlang einer Kreislinie in horizontaler Richtung. Die zweite Nut 540 und die dritte Nut 545 erstrecken sich jeweils entlang von Sekanten zu der Kreislinie, wobei die Sekanten auf unterschiedlichen Seiten eines Durchmessers der Kreislinie liegen und gleiche Abstände zum Durchmesser aufweisen. Die Nuten 540 und 545 erstrecken sich bevorzugt in Querrichtung des Fahrzeugs 115, wenn die erste Befestigungseinrichtung 505 am Fahrzeug 115 angebracht ist.

An einer Innenseite eines Rahmens 215 kann ein elastisches Element wie eine Schaumstoffeinlage oder eine Gummilippe vorgesehen sein, um eine Druckstelle oder Beschädigung am Gegenstand 120 zu vermeiden. Das elastische Element kann einen Transport eines Gegenstands 120 ohne eine zusätzliche Befestigung im Inneren des Dachkoffers 105 erlauben. Mit anderen Worten kann der Gegenstand 120 lose im Inneren des Dachkoffers 105 liegen.

Optional können eine vierte Nut 550 und eine fünfte Nut 555 vorgesehen sein, die auf unterschiedlichen Seiten eines weiteren Durchmessers zur Kreislinie liegen und mit diesem gleiche Abstände einnehmen, wobei die Nuten 550, 555 mit den Nuten 540, 545 jeweils rechte Winkel einschließen. Dadurch liegen die Nuten 550 und 555 bevorzugt parallel zu einer Längsachse des Fahrzeugs 115. Die parallel verlaufenden Nuten 550, 555 können eine hohe Torsionsfestigkeit und eine Steifigkeit entgegen einer Verkippung um die Längsachse 405 des Fahrzeugs 115 gewährleisten. In der dargestellten Ausführungsform erstrecken sich die Nuten 550 und 555 auf einander gegenüber liegenden Seiten der ersten Nut 535, verlaufen aber bevorzugt nicht innerhalb der Kreislinie, der die erste Nut 535 folgt.

An der zweiten Befestigungseinrichtung 510 sind bevorzugt vier Nutensteine angebracht, die jeweils in eine der Nuten 535 bis 555 eingeführt werden können. Ein erster Nutenstein 560 und ein zweiter Nutenstein 565 sind starr gegeneinander am ersten Abschnitt 520 angebracht, ein dritter Nutenstein 570 und ein vierter Nutenstein 575 starr gegeneinander am zweiten Abschnitt 525. Der erste Nutenstein 560 und der dritte Nutenstein 570 liegen in der Darstellung von Figur 5 in der vierten Nut 550; der zweite Nutenstein 565 und der vierte Nutenstein 575 in der fünften Nut 555.

Um Wege der Abschnitte 520, 525 gegenüber der ersten Befestigungseinrichtung 505 zu limitieren, können eine oder mehrere Arretierungen 580 vorgesehen sein. Eine Arretierung 580 ist dazu eingerichtet, den Weg eines Nutensteins 560 bis 575 in einer der Nuten 535 bis 555 in einer oder beiden Richtungen entlang der Nut zu begrenzen. Die Arretierung 580 kann nach Art eines Rastmechanismus ausgebildet sein, die es erlauben kann, in einer vorbestimmten Richtung von einem Nutenstein 560 bis 575 passiert zu werden, ein Passieren in der entgegengesetzten Richtung jedoch verhindert.

In der dargestellten, beispielhaften Ausführungsform ist eine keilförmige Arretierung 580 vorgesehen, die senkrecht zur dritten Nut 545 beweglich angebracht ist. Ein elastisches Element kann vorgesehen sein, um die Arretierung 580 in der gezeigten Position zu halten. Aus dieser kann sie durch einen Nutenstein 560 bis 575 ausgelenkt werden, der die Arretierung 580 von links nach rechts passiert. Eine manuelle Entriegelung kann möglich sein, um die Arretierung 580 entgegen der Kraft des elastischen Elements aus der dritten Nut 545 zu verdrängen und so den Nutenstein 560 bis 575 passieren zu lassen. Andere Ausführungsformen einer Arretierung 580, beispielsweise mittels eines Drehverschlusses, sind ebenfalls möglich.

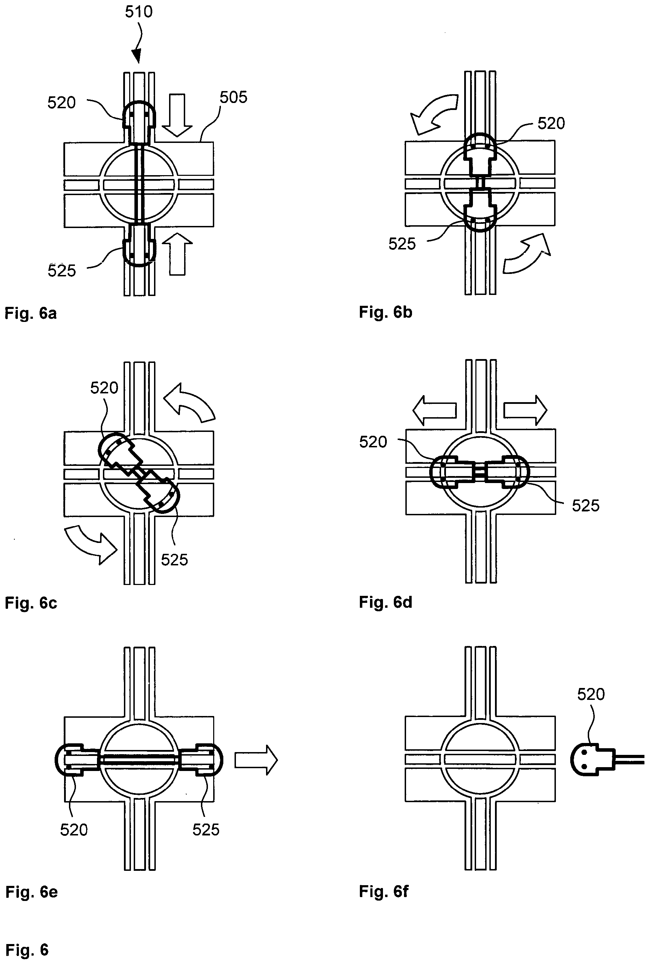

Figur 6 zeigt einen beispielhaften Kopplungsvorgang eines Dachgepäckträgers 110. Figuren 6A bis 6F zeigen unterschiedliche Stadien, die beim Abnehmen der zweiten Befestigungseinrichtung 510 von der ersten Befestigungseinrichtung 505 durchlaufen werden können. In den Figuren 6A bis 6E ist jeweils durch Pfeile angedeutet, welche Bewegung einer der Abschnitte 520, 525 durchläuft, um in der in der folgenden Figur 6B bis 6F gezeigten Position anzukommen. Für den gezeigten Ablauf wird von der in Figur 5 dargestellten Ausführungsform des Dachgepäckträgers 110 ausgegangen.

In Figur 6A befinden sich die Abschnitte 520, 525 in der in Figur 5 dargestellten Stellung. Einer oder mehrere der Nutensteine 560 bis 575 können in einer oder zwei Richtungen entlang der jeweiligen Nut 550, 555 mittels einer Arretierung 580 fixiert sein. Die Abschnitte 520, 525 können nun aufeinander zubewegt werden, sodass die Nutensteine 560 bis 575 in den Nuten 550, 555 so weit verschoben werden, dass sie die erste Nut 535 erreichen, wie in Figur 6B dargestellt ist.

Nun kann die zweite Befestigungseinrichtung 510 gegenüber der ersten 505 verdreht werden, und zwar beispielhaft entgegen dem Uhrzeigersinn. Dabei laufen die Nutensteine 560 bis 575 in der ersten Nut 535, bis in die in Figur 6C gezeigte Position.

Von dort kann die Drehung fortgeführt werden, bis der erste Nutenstein 560 und der dritte Nutenstein 570 in der dritten Nut 545 und der zweite Nutenstein 565 und der vierte Nutenstein 575 in der zweiten Nut 540 liegen, wie in Figur 6D dargestellt ist.

Optional können dann die Abschnitte 520 und 525 voneinander entfernt werden, wobei die Nutensteine 560, 565 und/oder 570, 575 in den Nuten 540 bzw. 545 verschoben werden. Es ergibt sich dann die in Figur 6E gezeigte Konfiguration.

Die zweite Befestigungseinrichtung 510 kann nun durch seitliches Verschieben, in der dargestellten Ausführungsform nach rechts, von der ersten Befestigungseinrichtung 505 getrennt werden. Um zu verhindern, dass einer der Nutensteine 560 bis 575 unbeabsichtigt eine der Nuten 535 bis 545 verlässt, können eine oder mehrere Arretierungen 580 vorgesehen sein, die manuell gelöst werden können, um das Trennen zu ermöglichen. Figur 6F zeigt die erste Befestigungseinrichtung 505, von der die zweite Befestigungseinrichtung 510 entfernt ist.

Zum Anbringen der zweiten Befestigungseinrichtung 510 an der ersten 505 können die dargestellten Schritte in entgegengesetzter Reihenfolge durchlaufen werden. Es ist zu beachten, dass der Vorgang einfacher gestaltet sein kann, wenn die Abschnitte 520, 525 nicht dazu eingerichtet sind, aufeinander zu oder voneinander weg bewegt zu werden. In diesem Fall ist ihr gegenseitiger Abstand so zu wählen, wie in einer der Figuren 6B bis 6D dargestellt ist.

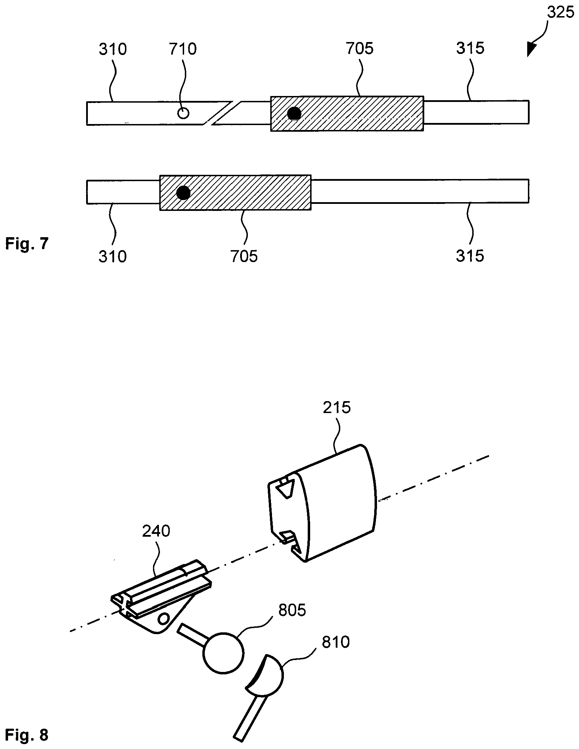

Figur 7 zeigt eine Ausführungsform eines Schlosses 325 zum Verbinden von Abschnitten 310, 315 eines Rahmens 215. Im oberen Bereich von Figur 7 ist das Schloss 325 geöffnet, im unteren Bereich geschlossen dargestellt. Um das Schloss 325 zu schließen, können Enden der Abschnitte 310, 315 zunächst nahe aneinander gebracht werden. Die Enden können wie dargestellt auf Gehrung geschnitten sein oder in anderer Weise dazu eingerichtet sein, in eine gegenseitig fluchtende Position gebracht zu werden. In einer anderen Ausführungsform kann eines der Enden einen Konus und das andere eine korrespondierende Vertiefung tragen. Zur Herstellung des Kraftschlusses zwischen den Abschnitten 310 und 315 kann eine Hülse 705, die vorliegend beispielhaft auf den dritten Abschnitt 315 aufgeschoben ist, axial so verschoben werden, dass sie die Enden beider Abschnitte 310, 315 enthält. Eine axiale Position der Hülse 705 kann beispielsweise mittels eines federbelasteten Rastelements 710 fixiert werden, das vorliegend an dem ersten Abschnitt 305 angebracht ist. An der Hülse 705 kann eine Aussparung vorgesehen sein, in die das Rastelement 710 von innen eingreifen kann. Um die Hülse 705 axial zu entriegeln, kann durch die Aussparung hindurch das Rastelement 710 zurückgedrängt werden.

Figur 8 zeigt eine Ausführungsform eines Gleiters 240 an einem Rahmen 215 in einer Darstellung nach Art einer Explosionszeichnung. In der dargestellten Ausführungsform umfasst der Rahmen 215 eine Nut, in die der Gleiter 240 nach Art eines Nutensteins eingreift. Andere Ausführungsformen sind ebenfalls möglich. Zur Verbindung des Gleiters 240 mit dem Scherenmechanismus 220 kann ein Drehgelenk nach Art des Drehgelenks 235 verwendet werden. In einer anderen Ausführungsform, die in Figur 8 dargestellt ist, ist das Gelenk durch eine Kugel 805 und eine Pfanne 810 gebildet. Die Kugel 805 und die Pfanne 810 können in einer lösbaren Verbindung stehen, die bevorzugt mittels eines Sicherungsstifts gesichert werden kann. So kann ein Öffnen und Schließen einer Verbindung zwischen Abschnitten 310, 315 eines Rahmens 215 unterstützt werden. Die Kugel 805 ist am Gleiter 240 angebracht; die Pfanne 810 kann mit einem Ende eines Hebels 230 verbunden sein. In einer anderen Ausführungsform können die Kugel 805 und die Pfanne 810 miteinander vertauscht sein.

### Bezugszeichen

- 100: System
- 105: Dachkoffer
- 110: Dachgepäckträger
- 115: Fahrzeug
- 120: Gegenstände
- 125: Surfbrett
- 130: Tasche mit Segel, Mast
- 135: Gabelbaum

- 205: Längsachse
- 210: Hülle
- 215: Rahmen
- 220: Scherenmechanismus
- 225: Abschnitt
- 230: Hebel
- 235: Drehgelenk
- 240: Gleiter
- 245: Reißverschluss
- 250: Abschlusselement

- 305: erster Abschnitt
- 310: zweiter Abschnitt
- 315: dritter Abschnitt
- 320: Klappgelenk
- 325: Schloss

- 405: Längsachse des Fahrzeugs
- 410: Abdeckung

- 505: erste Befestigungseinrichtung (zum Fahrzeug)
- 510: zweite Befestigungseinrichtung (zum Dachkoffer)
- 515: Mechanismus
- 520: erster Abschnitt der zweiten Befestigungseinrichtung
- 525: zweiter Abschnitt der zweiten Befestigungseinrichtung
- 530: Verbindung
- 535: erste Nut (entlang Kreislinie)
- 540: zweite Nut (entlang erster Sekante)
- 545: dritte Nut (entlang zweiter Sekante)
- 550: vierte Nut
- 555: fünfte Nut
- 560: erster Nutenstein
- 565: zweiter Nutenstein
- 570: dritter Nutenstein
- 575: vierter Nutenstein
- 580: Arretierung

- 705: Hülse
- 710: Rastelement

- 805: Kugel
- 810: Pfanne

## Patentansprüche

1. Dachkoffer (105) zur Anbringung auf einem Fahrzeug (115), wobei der Dachkoffer (105) folgendes umfasst:
- eine flexible Hülle (210) zur Aufnahme eines zu transportierenden Gegenstands (120);
- eine Längsachse (205);
- wenigstens drei Rahmen (215), die sich jeweils in einer Ebene senkrecht zur Längsachse (205) erstrecken;
- wobei die Rahmen (215) dazu eingerichtet sind, die Hülle (210) quer zur Längsachse (205) aufzuspannen; und
- einen Scherenmechanismus (220), um die Rahmen (215) entlang der Längsachse (205) in vorbestimmten Abstandsverhältnissen zueinander zu halten.

2. Dachkoffer (105) nach Anspruch 1, wobei der Dachkoffer (105) seine breiteste und höchste Stelle in einem mittleren Bereich aufweist und von dort nach vorne und hinten flacher und/oder schmaler wird.

3. Dachkoffer (105) nach Anspruch 1 oder 2, wobei der Scherenmechanismus (220) dazu eingerichtet ist, jeweils benachbarte Rahmen (215) in gleichen Abständen zueinander zu halten.

4. Dachkoffer (105) nach einem der vorangehenden Ansprüche, wobei der Dachkoffer (105) in eine erste Konfiguration gebracht werden kann, in der die Hülle (210) in Längsrichtung zwischen den Rahmen (215) aufgespannt ist und der Dachkoffer (105) eine erste Länge einnimmt, oder in eine zweite Konfiguration, in der die Hülle (210) in Längsrichtung zwischen den Rahmen (215) komprimiert ist und der Dachkoffer (105) eine zweite Länge erreicht, die kleiner als die erste Länge ist.

5. Dachkoffer (105) nach einem der vorangehenden Ansprüche, wobei die Hülle (210) in einem vorderen oder hinteren Bereich einen horizontalen Reißverschluss (245) aufweist, um den Gegenstand (120) in die Hülle (210) legen oder aus ihr entfernen zu können.

6. Dachkoffer (105) einem der vorangehenden Ansprüche, ferner umfassend einen Rastmechanismus, um den Scherenmechanismus (220) in einer vorbestimmten Position zu halten.

7. Dachkoffer (105) nach einem der vorangehenden Ansprüche, wobei ein Abschnitt der Hülle mittels eines Geflechts aus Drähten oder Fasern verstärkt ist.

8. Dachkoffer (105) nach einem der Ansprüche 4 bis 7, ferner umfassend eine Abdeckung (410), die dazu eingerichtet ist, über den Dachkoffer (105) in der zweiten Konfiguration gezogen zu werden.

9. System (100), umfassend einen Dachkoffer (105) nach einem der Ansprüche 4 bis 8 und einen Dachgepäckträger (110) zur Anbringung des Dachkoffers (105) auf einem Fahrzeug (115), wobei der Dachgepäckträger (110) dazu eingerichtet ist, ein. Verdrehen des Dachkoffers (105) in der zweiten Konfiguration um eine Hochachse zu erlauben.

## Claims

1. A roof box (105) for mounting on a vehicle (115), the roof box (105) comprising:
- a flexible shell (210) for receiving an object (120) to be transported;
- a longitudinal axis (205);
- at least three frames (215) each extending in a plane perpendicular to the longitudinal axis (205);
- the frames (215) being adapted to span the envelope (210) transverse to the longitudinal axis (205); and
- a scissor mechanism (220) for maintaining the frames (215) in predetermined spaced-apart relationships along the longitudinal axis (205).

2. A roof box (105) according to claim 1, wherein the roof box (105) has its widest and highest point in a central region and becomes flatter and/or narrower from there towards the front and rear.

3. A roof box (105) according to claim 1 or 2, wherein the scissor mechanism (220) is arranged to hold respective adjacent frames (215) at equal distances from each other.

4. A roof box (105) according to any one of the preceding claims, wherein the roof box (105) can be placed in a first configuration in which the shell (210) is stretched longitudinally between the frames (215) and the roof box (105) reaches a first length, or in a second configuration in which the shell (210) is compressed longitudinally between the frames (215) and the roof box (105) reaches a second length that is smaller than the first length.

5. A roof box (105) according to any one of the preceding claims, wherein the cover (210) has a horizontal zip (245) in a front or rear region to allow the article (120) to be placed in or removed from the cover (210).

6. The roof box (105) of any one of the preceding claims, further comprising a latching mechanism to hold the scissor mechanism (220) in a predetermined position.

7. A roof box (105) according to any one of the preceding claims, wherein a portion of the shell is reinforced by means of a braid of wires or fibres.

8. A roof box (105) according to any one of claims 4 to 7, further comprising a cover (410) adapted to be pulled over the roof box (105) in the second configuration.

9. A system (100) comprising a roof box (105) according to any one of claims 4 to 8 and a roof rack (110) for mounting the roof box (105) on a vehicle (115), wherein the roof rack (110) is adapted to allow the roof box (105) to rotate about a vertical axis in the second configuration.

## Revendications

1. Coffre de toit (105) destiné à être monté sur un véhicule (115), le coffre de toit (105) comprenant:
- une enveloppe flexible (210) destinée à recevoir un objet (120) à transporter;
- un axe longitudinal (205);
- au moins trois cadres (215), chacun s'étendant dans un plan perpendiculaire à l'axe longitudinal (205);
- les cadres (215) étant adaptés pour tendre l'enveloppe (210) transversalement à l'axe longitudinal (205); et
- un mécanisme de ciseaux (220) pour maintenir les cadres (215) à des distances prédéterminées les uns des autres le long de l'axe longitudinal (205).

2. Coffre de toit (105) selon la revendication 1, dans lequel le coffre de toit (105) présente son point le plus large et le plus haut dans une zone centrale et devient plus plat et/ou plus étroit à partir de là vers l'avant et l'arrière.

3. Coffre de toit (105) selon la revendication 1 ou 2, dans lequel le mécanisme de ciseaux (220) est adapté pour maintenir des cadres adjacents respectifs (215) à des distances égales les uns des autres.

4. Coffre de toit (105) selon l'une quelconque des revendications précédentes, dans lequel le coffre de toit (105) peut être amené dans une première configuration dans laquelle l'enveloppe (210) est tendue longitudinalement entre les cadres (215) et le coffre de toit (105) occupe une première longueur, ou dans une deuxième configuration dans laquelle l'enveloppe (210) est comprimée longitudinalement entre les cadres (215) et le coffre de toit (105) atteint une deuxième longueur inférieure à la première longueur.

5. Coffre de toit (105) selon l'une quelconque des revendications précédentes, dans lequel l'enveloppe (210) comporte une fermeture à glissière horizontale (245) dans une zone avant ou arrière pour permettre de placer l'objet (120) dans l'enveloppe (210) ou de l'en retirer.

6. Coffre de toit (105) selon l'une quelconque des revendications précédentes, comprenant en outre un mécanisme de verrouillage pour maintenir le mécanisme de ciseaux (220) dans une position prédéterminée.

7. Coffre de toit (105) selon l'une quelconque des revendications précédentes, dans lequel une partie de l'enveloppe est renforcée au moyen d'un tressage de fils ou de fibres.

8. Coffre de toit (105) selon l'une quelconque des revendications 4 à 7, comprenant en outre un couvercle (410) adapté pour être tiré sur le coffre de toit (105) dans la deuxième configuration.

9. Système (100) comprenant un coffre de toit (105) selon l'une quelconque des revendications 4 à 8 et une galerie de toit (110) pour monter le coffre de toit (105) sur un véhicule (115), dans lequel la galerie de toit (110) est adaptée pour permettre une rotation du coffre de toit (105) autour d'un axe vertical dans la deuxième configuration.
